# EUROPEAN PATENT APPLICATION

(11) **EP 4 718 277 A1**
(43) Date of publication of application: **01.04.2026**
(21) Application number: 24830879.3
(22) Date of filing: 27.06.2024
(51) Int. Cl.: G06F 16/33

(54) **RETRIEVAL METHOD AND COMPUTER DEVICE**

(30) Priority: 28.06.2023 CN 202310782717; 15.09.2023 CN 202311197640
(71) Applicant: Huawei Technologies Co., Ltd., Shenzhen, Guangdong 518129 (CN)
(72) Inventor: HAN, Qingsen, Shenzhen, Guangdong 518129 (CN); LI, Zijian, Shenzhen, Guangdong 518129 (CN); CAO, Li, Shenzhen, Guangdong 518129 (CN); YU, Lijun, Shenzhen, Guangdong 518129 (CN)
(74) Representative: Gill Jennings & Every LLP
(86) International application number: PCT/CN2024/101952
(87) International publication number: WO 2025/002246

(57) **Abstract**

A retrieval method and a computer device are disclosed, and relate to the computer field. The method includes: A first processor determines, based on a database determined based on a plurality of retrieval requests, that the first processor executes a first partial retrieval request in the plurality of retrieval requests, and a second processor executes a second partial retrieval request in the plurality of retrieval requests, that is, the first processor executes the first partial retrieval request to obtain a first retrieval result, and the second processor executes the second partial retrieval request to obtain a second retrieval result; and obtains retrieval results of the plurality of retrieval requests based on the first retrieval result and the second retrieval result. Therefore, the database and the plurality of retrieval requests are allocated to the two processors by adaptively sensing a characteristic of the database, so that the two processors perform retrieval based on the allocated database and retrieval requests. In this way, computing power of a plurality of types of processors is fully utilized, and retrieval is performed in parallel based on a heterogeneous computing architecture, thereby improving retrieval efficiency and improving utilization of the computing power of the processors.

## Description

This application claims priorities to Chinese Patent Application No. 202310782717.5, filed with the China National Intellectual Property Administration on June 28, 2023 and entitled "RETRIEVAL METHOD", and to Chinese Patent Application No. 202311197640.1, filed with the China National Intellectual Property Administration on September 15, 2023 and entitled "RETRIEVAL METHOD AND COMPUTER DEVICE", both of which are incorporated herein by reference in their entireties.

### TECHNICAL FIELD

This application relates to the computer field, and in particular, to a retrieval method and a computer device.

### BACKGROUND

Currently, with development of big data applications, massive data is bursting, for example, unstructured data such as images, texts, videos, and voice. The unstructured data is converted into a high-dimensional vector, and the high-dimensional vector represents semantics of the unstructured data. This process may be referred to as vectorization (embedding). Further, a single processor retrieves a database based on a retrieval request to obtain a retrieval result, for example, retrieves a vector similar to the queried content from the database, to implement analysis and retrieval of the unstructured data. However, as a data scale and complexity increase, current hardware cannot support high concurrency retrieval, resulting in low retrieval efficiency.

### SUMMARY

This application provides a retrieval method and a computer device, to improve retrieval efficiency.

According to a first aspect, a retrieval method is provided. The method is applied to a computing system, the computing system includes a first processor and a second processor, and the method includes: first, after determining, based on a plurality of retrieval requests, a database that needs to be retrieved, the first processor determines, based on a characteristic of the database, that the first processor executes a first partial retrieval request in the plurality of retrieval requests, and the second processor executes a second partial retrieval request in the plurality of retrieval requests, that is, the first processor executes the first partial retrieval request to obtain a first retrieval result, and the second processor executes the second partial retrieval request to obtain a second retrieval result; and finally, obtains retrieval results of the plurality of retrieval requests based on the first retrieval result and the second retrieval result.

Compared with a case in which only a single processor retrieves a database based on a retrieval request to obtain a retrieval result, in the solution provided in this application, a retrieval range used by the two processors to perform retrieval is determined based on the characteristic of the database, that is, the database and the plurality of retrieval requests are allocated to the two processors by adaptively sensing the characteristic of the database, so that the two processors perform retrieval based on the allocated database and retrieval requests. In this way, computing power of a plurality of types of processors is fully utilized, and retrieval is performed in parallel based on a heterogeneous computing architecture, thereby improving retrieval efficiency and improving utilization of the computing power of the processors, and hardware expansion is not needed, thereby reducing costs.

In a possible implementation, determining, based on the characteristic of the database, that the first processor executes the first partial retrieval request in the plurality of retrieval requests, and the second processor executes the second partial retrieval request in the plurality of retrieval requests includes: when a size of the database is greater than a processing capability of the first processor, separately sending the plurality of retrieval requests to the first processor and the second processor, where both the first partial retrieval request and the second partial retrieval request are the plurality of retrieval requests.

In another possible implementation, the method includes: dividing the database into a first sub-database and a second sub-database based on capabilities of the first processor and the second processor; and that the first processor executes the first partial retrieval request to obtain the first retrieval result, and the second processor executes the second partial retrieval request to obtain the second retrieval result includes: The first processor queries the first partial retrieval request in the first sub-database to obtain the first retrieval result, and the second processor queries the second partial retrieval request in the second sub-database to obtain the second retrieval result.

In this way, when computing power of a single processor does not support a scale of the database, the database is divided based on capabilities of different types of processors, and the two processors separately perform retrieval on the plurality of retrieval requests based on some content in the databases, that is, perform retrieval in parallel based on different sub-databases, thereby effectively improving retrieval efficiency.

In another possible implementation, obtaining the retrieval results of the plurality of retrieval requests based on the first retrieval result and the second retrieval result includes: selecting, from the first retrieval result and the second retrieval result, a retrieval result similar to the retrieval request, to determine the retrieval results of the plurality of retrieval requests.

In another possible implementation, determining, based on the characteristic of the database, that the first processor executes the first partial retrieval request in the plurality of retrieval requests, and the second processor executes the second partial retrieval request in the plurality of retrieval requests includes: when a size of the database is less than or equal to a processing capability of the first processor, dividing the plurality of retrieval requests into the first partial retrieval request and the second partial retrieval request based on processing capabilities of the first processor and the second processor.

In this way, when computing power of a single processor supports a scale of the database, the plurality of retrieval requests are divided based on capabilities of different types of processors, and the two processors separately perform retrieval on the database based on some retrieval requests in the plurality of retrieval requests, that is, perform retrieval in parallel based on different retrieval requests, thereby effectively improving retrieval efficiency.

In another possible implementation, that the first processor executes the first partial retrieval request to obtain the first retrieval result, and the second processor executes the second partial retrieval request to obtain the second retrieval result includes: The first processor queries the first partial retrieval request in the database to obtain the first retrieval result, and the second processor queries the second partial retrieval request in the database to obtain the second retrieval result.

In this way, a retrieval result that is closer to or more similar to the retrieval request is obtained by comparing the first retrieval result with the second retrieval result, thereby ensuring accuracy of the retrieval result.

In another possible implementation, that the first processor executes the first partial retrieval request to obtain the first retrieval result, and the second processor executes the second partial retrieval request to obtain the second retrieval result includes: determining a retrieval algorithm based on a distribution characteristic of the database. The first processor executes the first partial retrieval request according to the retrieval algorithm to obtain the first retrieval result, and the second processor executes the second partial retrieval request according to the retrieval algorithm to obtain the second retrieval result.

In this way, the retrieval algorithm is determined based on the distribution characteristic of the database, and the database is retrieved according to the retrieval algorithm, so that a retrieval result similar to the retrieval request can be found from the database as soon as possible, thereby improving retrieval efficiency and retrieval precision.

In another possible implementation, determining the retrieval algorithm based on the distribution characteristic of the database includes: when the distribution characteristic is random distribution, determining that the retrieval algorithm is an exact retrieval algorithm; or when the distribution characteristic is dense distribution or sparse distribution, determining that the retrieval algorithm is an approximate retrieval algorithm.

Because randomly distributed data has poor regularity, compared with an approximate retrieval algorithm, performing retrieval according to an exact retrieval algorithm to ensure that a similar result can be found avoids missing detection, thereby improving retrieval precision.

Because densely or sparsely distributed data is regular, compared with an exact retrieval algorithm, performing retrieval according to an approximate retrieval algorithm to ensure that a similar result can be found as soon as possible improves retrieval efficiency.

In another possible implementation, the method further includes: determining the distribution characteristic based on a statistical characteristic and an attribute of the database.

Therefore, the retrieval algorithm is determined based on the distribution characteristic of the database that is determined based on the statistical characteristic and the attribute of the database, to improve retrieval precision.

In another possible implementation, determining, based on the distribution characteristic of the database, the retrieval algorithm used by the first processor and the second processor to perform retrieval includes: determining, based on the distribution characteristic of the database, a plurality of retrieval algorithms used by the first processor and the second processor to perform retrieval; and determining, from the plurality of retrieval algorithms, a retrieval algorithm indicated by a user.

In another possible implementation, the database includes a vector, and the plurality of retrieval requests are used to perform vector retrieval on the database. The first processor determines a to-be-retrieved vector library based on the plurality of retrieval requests. The first processor determines a retrieval solution based on a characteristic of the vector library, where the retrieval solution indicates a vector retrieval range and a vector retrieval algorithm that are used by at least two processors in a computing system to perform vector retrieval, and the vector retrieval range indicates a range of the vector library and a range of the plurality of retrieval requests. The first processor performs vector retrieval based on the vector retrieval range and the vector retrieval algorithm that are indicated by the retrieval solution and that are used by the first processor, to obtain the first retrieval result. The second processor performs vector retrieval based on the vector retrieval range and the vector retrieval algorithm that are indicated by the retrieval solution and that are used by the second processor, to obtain the second retrieval result. The first processor obtains the retrieval results of the plurality of retrieval requests based on the first retrieval result and the second retrieval result.

According to a second aspect, a retrieval apparatus is provided. The retrieval apparatus includes modules configured to perform the retrieval method according to any one of the first aspect or the possible designs of the first aspect. For example, the retrieval apparatus includes a communication module, a data sensing module, and a data retrieval module.

The data sensing module is configured to determine, based on a plurality of retrieval requests, a database that needs to be retrieved. The data sensing module is further configured to determine, based on a characteristic of the database, that a first processor executes a first partial retrieval request in the plurality of retrieval requests, and a second processor executes a second partial retrieval request in the plurality of retrieval requests. The data retrieval module is configured to execute the first partial retrieval request to obtain a first retrieval result. The data retrieval module is further configured to execute the second partial retrieval request to obtain a second retrieval result. The data retrieval module is further configured to obtain retrieval results of the plurality of retrieval requests based on the first retrieval result and the second retrieval result.

In a possible implementation, when determining, based on the characteristic of the database, that the first processor executes the first partial retrieval request in the plurality of retrieval requests, and the second processor executes the second partial retrieval request in the plurality of retrieval requests, the data sensing module is specifically configured to: when a size of the database is greater than a processing capability of the first processor, separately send the plurality of retrieval requests to the first processor and the second processor, where both the first partial retrieval request and the second partial retrieval request are the plurality of retrieval requests.

In another possible implementation, the data sensing module is further configured to divide the database into a first sub-database and a second sub-database based on capabilities of the first processor and the second processor. When the first processor executes the first partial retrieval request to obtain the first retrieval result, and the second processor executes the second partial retrieval request to obtain the second retrieval result, the data retrieval module is specifically configured to: query, by the first processor, the first partial retrieval request in the first sub-database to obtain the first retrieval result, and query, by the second processor, the second partial retrieval request in the second sub-database to obtain the second retrieval result.

In another possible implementation, when obtaining the retrieval results of the plurality of retrieval requests based on the first retrieval result and the second retrieval result, the data retrieval module is specifically configured to select, from the first retrieval result and the second retrieval result, a retrieval result similar to the retrieval request, to determine the retrieval results of the plurality of retrieval requests.

In another possible implementation, when determining, based on the characteristic of the database, that the first processor executes the first partial retrieval request in the plurality of retrieval requests, and the second processor executes the second partial retrieval request in the plurality of retrieval requests, the data sensing module is specifically configured to: when a size of the database is less than or equal to a processing capability of the first processor, divide the plurality of retrieval requests into the first partial retrieval request and the second partial retrieval request based on processing capabilities of the first processor and the second processor.

In another possible implementation, when the first processor executes the first partial retrieval request to obtain the first retrieval result, and the second processor executes the second partial retrieval request to obtain the second retrieval result, the data retrieval module is specifically configured to: query, by the first processor, the first partial retrieval request in the database to obtain the first retrieval result, and query, by the second processor, the second partial retrieval request in the database to obtain the second retrieval result.

In another possible implementation, when the first processor executes the first partial retrieval request to obtain the first retrieval result, and the second processor executes the second partial retrieval request to obtain the second retrieval result, the data sensing module is specifically configured to determine a retrieval algorithm based on a distribution characteristic of the database. The first processor executes the first partial retrieval request according to the retrieval algorithm to obtain the first retrieval result, and the second processor executes the second partial retrieval request according to the retrieval algorithm to obtain the second retrieval result.

In another possible implementation, when determining the retrieval algorithm based on the distribution characteristic of the database, the data sensing module is specifically configured to: when the distribution characteristic is random distribution, determine that the retrieval algorithm is an exact retrieval algorithm; or when the distribution characteristic is dense distribution or sparse distribution, determine that the retrieval algorithm is an approximate retrieval algorithm.

In another possible implementation, the data sensing module is further configured to determine the distribution characteristic based on a statistical characteristic and an attribute of the database.

In another possible implementation, when determining, based on the distribution characteristic of the database, the retrieval algorithm used by the first processor and the second processor to perform retrieval, the data sensing module is specifically configured to: determine, based on the distribution characteristic of the database, a plurality of retrieval algorithms used by the first processor and the second processor to perform retrieval; and determine, from the plurality of retrieval algorithms, a retrieval algorithm indicated by a user.

In another possible implementation, the database includes a vector, and the plurality of retrieval requests are used to perform vector retrieval on the database. The data sensing module is configured to: determine a to-be-retrieved vector library based on the plurality of retrieval requests; and determine a retrieval solution based on a characteristic of the vector library, where the retrieval solution indicates a vector retrieval range and a vector retrieval algorithm that are used by at least two processors in a computing system to perform vector retrieval, and the vector retrieval range indicates a range of the vector library and a range of the plurality of retrieval requests. The data retrieval module is configured to perform vector retrieval based on the vector retrieval range and the vector retrieval algorithm that are indicated by the retrieval solution and that are used by the first processor, to obtain the first retrieval result. The data retrieval module is further configured to perform vector retrieval based on the vector retrieval range and the vector retrieval algorithm that are indicated by the retrieval solution and that are used by the second processor, to obtain the second retrieval result. The data retrieval module is further configured to obtain the retrieval results of the plurality of retrieval requests based on the first retrieval result and the second retrieval result.

According to a third aspect, a computer device is provided. The computer device includes a storage and a plurality of different types of processors. The storage is configured to store a group of computer instructions. When executing the group of computer instructions, the processor performs operation steps of the retrieval method according to any one of the first aspect or the possible implementations of the first aspect.

According to a fourth aspect, a data processing system is provided. The data processing system includes a client and a plurality of computer devices. The client is configured to send a retrieval request to the computer device, and the computer device is configured to perform operation steps of the retrieval method according to any one of the first aspect or the possible implementations of the first aspect, to retrieve a plurality of retrieval requests.

According to a fifth aspect, a computer-readable storage medium is provided, and includes computer software instructions. When the computer software instructions are run on a computer device, the computer device is enabled to perform operation steps of the method according to any one of the first aspect or the possible implementations of the first aspect.

According to a sixth aspect, a computer program product is provided. When the computer program product runs on a computer, the computer is enabled to perform operation steps of the method according to any one of the first aspect or the possible implementations of the first aspect.

For technical effects brought by any one of the designs of the second aspect to the sixth aspect, refer to the technical effects brought by the first aspect or different designs. Details are not described herein again.

In this application, on the basis of the implementations according to the foregoing aspects, the implementations may be further combined to provide more implementations.

### BRIEF DESCRIPTION OF DRAWINGS

FIG. 1 is a diagram of an architecture of a data processing system according to this application;
FIG. 2 is a schematic flowchart of a retrieval method according to this application;
FIG. 3 is a diagram of performing vector retrieval based on a heterogeneous computing architecture according to this application;
FIG. 4 is a diagram of a data sensing-based retrieval solution according to this application;
FIG. 5 is a diagram of performing retrieval based on a retrieval solution according to this application;
FIG. 6 is a diagram of a structure of a retrieval apparatus according to this application; and
FIG. 7 is a diagram of a structure of a computer device according to this application.

### DESCRIPTION OF EMBODIMENTS

For ease of understanding, main terms in this application are first explained.

**Vector (vector):** may also be referred to as a Euclidean vector or a geometric vector. In mathematics, the vector refers to a quantity with size and direction. A line segment with an arrow may represent a vector, the arrow represents a direction of the vector, and a length of the line segment represents a size of the vector. A quantity corresponding to the vector may be referred to as a number or a scalar, and the number or the scalar has only a size and has no direction.

Because a computer device can identify only digits, a group of digits represents or identifies an object, and the group of digits may be a vector. If a vector includes n digits, the vector may be referred to as an n-dimensional vector. For example, the computer device identifies an image, and converts the image into a vector of n dimensions or higher dimensions.

**Vector retrieval:** means that a vector close to or similar to a retrieval request is found from a database.

Application scenarios of vector retrieval include but are not limited to system recommendation, picture search, video fingerprinting, voice processing, natural language processing, and the like, for example, advertisement recommendation, search engine association word recommendation, image-based search, image-based video search, image-based offering search, and file search.

To resolve a problem of low retrieval efficiency, this application provides a retrieval method. To be specific, after determining, based on a plurality of retrieval requests, a database that needs to be retrieved, a first processor determines, based on a characteristic of the database, that the first processor executes a first partial retrieval request in the plurality of retrieval requests, and a second processor executes a second partial retrieval request in the plurality of retrieval requests, that is, the first processor executes the first partial retrieval request to obtain a first retrieval result, and the second processor executes the second partial retrieval request to obtain a second retrieval result; and finally, obtains retrieval results of the plurality of retrieval requests based on the first retrieval result and the second retrieval result.

Compared with a case in which only a single processor retrieves a database based on a retrieval request to obtain a retrieval result, in the solution provided in this application, a retrieval range used by the two processors to perform retrieval is determined based on the characteristic of the database, that is, the database and the plurality of retrieval requests are allocated to the two processors by adaptively sensing the characteristic of the database, so that the two processors perform retrieval based on the allocated database and retrieval requests. In this way, computing power of a plurality of types of processors is fully utilized, and retrieval is performed in parallel based on a heterogeneous computing architecture, thereby improving retrieval efficiency and improving utilization of the computing power of the processors.

The following describes, in detail with reference to accompanying drawings, implementations of the retrieval method provided in this application.

The solutions provided in this application may be applied to a network of a client/server (Client/Server, C/S) architecture. The network of the client/server (Client/Server, C/S) architecture may include a single server or a server cluster. A type and a function of the server are not limited in this application. For example, the type of the server includes a blade server, a tower server, a cabinet server, and a rack server. For another example, the server includes a storage server having a storage function or a computing server having a computing function, and the computing server also has a storage function.

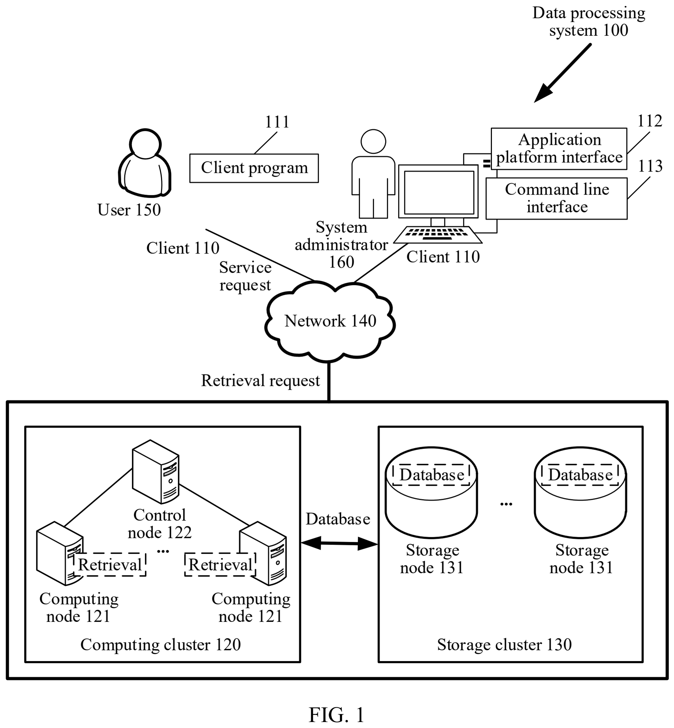

For example, FIG. 1 is a diagram of an architecture of a data processing system according to this application. As shown in FIG. 1, the data processing system 100 includes a client 110, a computing cluster 120, and a storage cluster 130.

The storage cluster 130 includes at least two storage nodes 131. One storage node 131 includes one or more controllers, a network interface card, and a plurality of hard disks. The hard disk is configured to store data. The hard disk may be a magnetic disk or another type of storage medium, for example, a solid-state drive or a shingled magnetic recording hard disk. The network interface card is configured to communicate with a computing node 121 included in the computing cluster 120. The controller is configured to: write data into the hard disk or read data from the hard disk based on a data read/write request sent by the computing node 121. In a data read/write process, the controller needs to convert an address carried in the data read/write request into an address that can be identified by the hard disk.

The computing cluster 120 includes at least two computing nodes 121, and the computing nodes 121 may communicate with each other. The computing node 121 is a computing device, such as a server, a desktop computer, or a controller of a storage array.

The client 110 communicates with the computing cluster 120 and the storage cluster 130 through a network 140. For example, the client 110 sends a retrieval request to the computing cluster 120 through the network 140, requesting the computing cluster 120 to retrieve a database based on the retrieval request, and obtain a retrieval result similar to the retrieval request. The network 140 may be an enterprise intranet (for example, a local area network (Local Area Network, LAN)) or the internet (Internet). The client 110 refers to a computer that is connected to the network 140, and may also be referred to as a workstation (workstation). Different clients may share network resources (such as a computing resource and a storage resource).

For another example, the client 110 sends a service request of a big data service to the computing cluster 120 through the network 140. The big data services may be referred to as a job (job). The job can be divided into a plurality of tasks (task). A plurality of computing nodes execute a plurality of tasks in parallel. When all the tasks are completed, it indicates that a job is completed. The task is usually a process of processing some data or phases in a job. All tasks are scheduled in parallel or in serials.

In some embodiments, the computing cluster 120 includes a control node 122. The control node and the computing node may be independent physical devices, and the control node may also be referred to as a control device or a naming node. The computing node may be referred to as a computing device or a data node. The control node 122 is configured to: manage and allocate a task or a retrieval request, and a plurality of computing nodes execute a plurality of tasks or retrieval requests in parallel, to improve a data processing rate.

In this embodiment of this application, the storage cluster 130 stores a database. For example, the database includes a vector obtained through vectorization (embedding) of unstructured data. A vector included in a database may be obtained by vectorizing a same type of unstructured data. Alternatively, a vector included in a database may be obtained by vectorizing different types of unstructured data. For example, all vectors included in the database are obtained through image vectorization. For another example, all vectors included in the database are obtained through video vectorization. For another example, all vectors included in the database are obtained through image and video vectorization. In addition, vectors included in a database have a same dimension. Dimensions of vectors included in different databases may be the same or different.

The computing cluster 120 includes a heterogeneous computing architecture to provide high-performance computing. For example, the computing node 121 may include computing units having a computing capability, such as a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU), to provide high-performance computing.

A client program 111 is installed on the client 110, the client 110 runs the client program 111 to display a user interface (user interface, UI), and a user 150 operates the user interface to submit a retrieval request. For example, the user 150 operates the user interface to submit a plurality of retrieval requests. After obtaining the retrieval request, the computing node 121 loads a database from the storage cluster 130, performs retrieval based on the database, and obtains a retrieval result close to or similar to the retrieval request. In some embodiments, after obtaining the retrieval request, the computing node 121 loads a database from the storage cluster 130, where the database includes a vector, and performs vector retrieval based on the database to obtain a vector close to or similar to the retrieval request.

In some other embodiments, the computing node 121 performs retrieval based on a heterogeneous computing architecture. After determining, based on a plurality of retrieval requests, a database that needs to be retrieved, a first processor determines, based on a characteristic of the database, that the first processor executes a first partial retrieval request in the plurality of retrieval requests, and a second processor executes a second partial retrieval request in the plurality of retrieval requests, that is, the first processor executes the first partial retrieval request to obtain a first retrieval result, and the second processor executes the second partial retrieval request to obtain a second retrieval result; and finally, obtains retrieval results of the plurality of retrieval requests based on the first retrieval result and the second retrieval result.

Optionally, a system administrator 160 may invoke, through the client 110, an application platform interface (application platform interface, API) 112 or a command line interface (command line interface, CLI) 113 to configure system information, for example, a retrieval policy configured for the computing node provided in this embodiment of this application.

FIG. 1 is merely a diagram. A device connection manner and a quantity of devices in the data processing system are not limited in this embodiment of this application. In addition, the data processing system may include a plurality of clients. One client may be connected to a plurality of computing nodes. Different clients establish connections to different computing nodes.

It should be noted that the vector retrieval function provided in this application may be implemented by a software system, or may be implemented by a hardware device, or may be implemented by a combination of a software system and a hardware device.

**In** a possible implementation, a cloud service provider abstracts the retrieval function into a cloud service, and deploys the cloud service in a cloud data center. The user may consult and purchase the cloud service through a cloud service platform. After purchasing the cloud service, the user may submit a retrieval request to the cloud data center through a terminal device, and the cloud data center runs a retrieval module to implement the retrieval function provided in this application.

**In** another possible implementation, the retrieval module may be encapsulated into a software package by a software provider. The user purchases the software package, and the user deploys the software package on a server of the user, or the user deploys the software package on a cloud server. For example, the retrieval module is deployed by a tenant in a computing resource (for example, a virtual machine) of a cloud data center leased by the tenant. The tenant purchases, through a cloud service platform, a computing resource cloud service provided by a cloud service provider, and runs the retrieval module in the purchased computing resource, so that the retrieval module performs the retrieval function provided in this application. Optionally, the retrieval module may further encrypt data uploaded by the user and a file path of the data, to avoid direct contact with the data uploaded by the user without affecting implementation effect, thereby ensuring information security.

The following describes a retrieval process in detail with reference to the accompanying drawings.

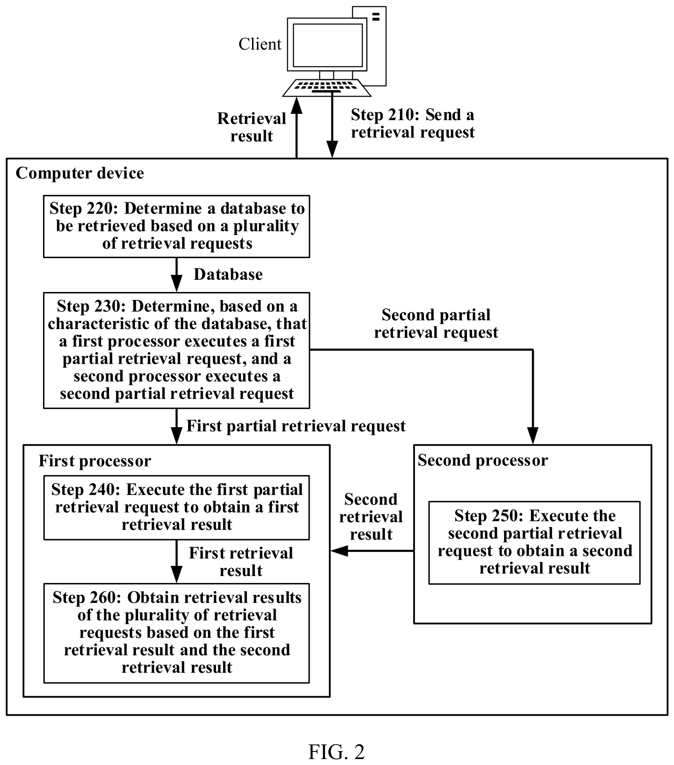

FIG. 2 is a schematic flowchart of a retrieval method according to this application. Herein, an example in which a heterogeneous computing architecture included in a computer device performs database sensing and retrieval is used for description. It is assumed that the computer device includes a first processor and a second processor, and the first processor and the second processor form a heterogeneous computing architecture. The first processor senses a characteristic of a database to determine a retrieval solution, and the first processor and the second processor perform retrieval according to the retrieval solution. The first processor may be a CPU. The second processor may be a GPU. The client may be the client shown in FIG. 1. The computer device may be a computing node in the computing cluster in FIG. 1. As shown in FIG. 2, the method includes the following steps.

**Step 210: The client sends a retrieval request.**

The client may send the retrieval request to the computer device through a network between the client and the computer device. The network may be an enterprise intranet (for example, a LAN) or the internet (Internet).

The retrieval request indicates a retrieval requirement. For example, the retrieval requirement is image-based search, image-based video search, or image-based object search. The retrieval request may include an image, a video, or a text.

**Step 220: The first processor determines a database to be retrieved based on a plurality of retrieval requests.**

If the retrieval request includes unstructured data, after receiving the retrieval request, the first processor may convert the unstructured data into a vector by using a depth coding model, and determine to retrieve a database similar to the converted vector. Optionally, a control node in a system may also convert the unstructured data into a vector by using a depth coding model.

If the retrieval request includes a vector, after receiving the retrieval request, the first processor determines to retrieve a database similar to the converted vector.

In some embodiments, vectors indicated by the plurality of retrieval requests have a same dimension, and the database is determined based on a vector dimension included in the retrieval request.

In some other embodiments, the plurality of retrieval requests indicate an identifier of the database to be retrieved, and the first processor determines, based on the identifier of the database, the database to be retrieved based on the plurality of retrieval requests.

**Step 230: Determine, based on a characteristic of the database, that the first processor executes a first partial retrieval request in the plurality of retrieval requests, and the second processor executes a second partial retrieval request in the plurality of retrieval requests.**

The first processor determines a retrieval solution based on the characteristic of the database. The retrieval solution indicates a retrieval request, a database, and a retrieval algorithm that are used by two different types of processors in a computing system to perform retrieval. It may also be understood that the first processor determines a retrieval range based on the characteristic of the database, and the retrieval range indicates a range of the database and a range of the plurality of retrieval requests that are used by the two different types of processors to perform retrieval.

Solution 1: The first processor divides the to-be-retrieved database into two sub-databases based on the characteristic of the database, and the two processors perform retrieval based on different sub-databases, the plurality of retrieval requests, and a retrieval algorithm determined based on the characteristic of the database.

Solution 2: The first processor divides the plurality of retrieval requests into a first partial retrieval request and a second partial retrieval request based on the characteristic of the database, and the two processors perform retrieval based on different retrieval requests, the to-be-retrieved database, and a retrieval algorithm determined based on the characteristic of the database.

In some embodiments, the first processor determines, based on an attribute of the database, the retrieval request and the database that are used by the first processor and the second processor to perform retrieval. For example, the attribute includes a scale of the database. For example, the scale of the database may refer to a vector dimension and a vector quantity of a vector in the database. A larger vector dimension and a larger vector quantity indicate a larger scale of the database. The first processor may determine, based on the scale of the database, the database and the retrieval algorithm that are used by the first processor and the second processor to perform retrieval.

For example, when computing power of a single processor in the computing system supports the scale of the database, or a size of the database is less than or equal to a processing capability of the first processor, it is determined that the retrieval solution is dividing the plurality of retrieval requests to enable the first processor and the second processor to perform retrieval based on different retrieval requests.

That the computing power of the single processor supports the scale of the database means that the computing power of the single processor meets a computing requirement of performing retrieval based on the database, or may be described as that a storage capacity of a storage medium associated with the single processor meets the size of the database, and the database can be loaded to the storage medium of the single processor. For example, the database can be loaded to a high bandwidth memory (High Bandwidth Memory, HBM) of a GPU, and the database can be loaded to a memory of a CPU, to retrieve, from the database, a retrieval result close to or similar to the retrieval request.

The plurality of retrieval requests are divided into two parts. For example, the plurality of retrieval requests are divided into a first partial retrieval request and a second partial retrieval request, and the first partial retrieval request and the second partial retrieval request form the plurality of retrieval requests. For example, the plurality of retrieval requests are divided into a first partial retrieval request and a second partial retrieval request based on processing capabilities of the first processor and the second processor. The two processors retrieve, based on a same database, vectors close to or similar to retrieval requests of different parts. That is, retrieval requests used by the two processors to perform retrieval are different

Compared with a case in which the single processor retrieves, from the database, retrieval results close to or similar to the plurality of retrieval requests, the plurality of retrieval requests are divided, and the two processors separately perform retrieval on two parts of retrieval requests, thereby effectively improving retrieval efficiency.

For another example, when computing power of a single processor in a heterogeneous retrieval architecture does not support the scale of the database, or the size of the database is greater than a processing capability of the first processor, it is determined that the retrieval solution is dividing the database to enable the first processor and the second processor to perform retrieval based on different sub-databases.

That the computing power of the single processor does not support the scale of the database means that the computing power of the single processor does not meet a computing requirement of performing retrieval based on the database, or may be described as that a storage capacity of a storage medium associated with the single processor does not meet the size of the database, and the database cannot be loaded to the storage medium of the single processor. For example, the database cannot be loaded to the HBM of the GPU, and the database cannot be loaded to the memory of the CPU. An error or breakdown may occur in a process of retrieving a retrieval result close to or similar to the retrieval request from the database.

The database is divided into two parts. For example, the database is divided into a first sub-database and a second sub-database, and the first sub-database and the second sub-database form the database. For example, the database is divided into a first sub-database and a second sub-database based on capabilities of the first processor and the second processor. The two processors retrieve, based on different databases, retrieval results close to or similar to the plurality of same retrieval requests. That is, databases used by the two processors to perform retrieval are different

Optionally, before the first processor and the second processor execute retrieval of the plurality of retrieval requests, the database is divided into a first sub-database and a second sub-database based on capabilities of the first processor and the second processor. Alternatively, after receiving the plurality of retrieval requests, the first processor divides the database into a first sub-database and a second sub-database based on capabilities of the first processor and the second processor. An occasion of dividing the database may not be limited in this application.

Compared with a case in which the single processor retrieves, from the database, retrieval results close to or similar to the plurality of retrieval requests, the plurality of databases are divided, and the two processors separately perform retrieval on the plurality of retrieval requests based on the two parts of database, thereby effectively improving retrieval efficiency, and hardware expansion is not needed, thereby reducing costs.

In some other embodiments, a retrieval algorithm used by the first processor and the second processor to perform retrieval is determined based on a distribution characteristic of the database. Compared with performing retrieval based on a retrieval algorithm or by randomly selecting a retrieval algorithm, performing retrieval based on the retrieval algorithm determined based on the distribution characteristic of the database effectively improves retrieval precision.

The distribution characteristic includes a concentration trend of the distribution, a dispersion degree of the distribution, and a shape of the distribution. The centralization trend of distribution reflects a degree to which data is close to or aggregated to a central value of the data. The dispersion degree of the distribution reflects a trend at which data deviates from a central value of the data. The shape of the distribution reflects skewness and kurtosis of data distribution.

In general, the concentration trend is also referred to as a "central location of data", a "concentration quantity", and the like. The concentration trend is a representative value of a group of data. A concept of the concentration trend is a concept of an average. The concentration trend can represent a characteristic of the whole, indicating a common nature and general level of a researched public opinion phenomenon under specific time and space conditions.

In this embodiment of this application, the distribution characteristic includes random distribution, dense distribution, and sparse distribution.

In some embodiments, the first processor determines the distribution characteristic based on a statistical characteristic and an attribute of the database. The statistical characteristic includes at least one of a mean value, a standard deviation, a variance, or the like of the database.

When the distribution characteristic is random distribution, it is determined that the retrieval algorithm is an exact retrieval algorithm. The exact retrieval algorithm includes a brute-force retrieval algorithm. Because randomly distributed data has poor regularity, compared with an approximate retrieval algorithm, performing retrieval according to an exact retrieval algorithm to ensure that a possible result can be found avoids missing detection, thereby improving retrieval precision.

When the distribution characteristic is dense distribution or sparse distribution, it is determined that the retrieval algorithm is an approximate retrieval algorithm. For example, the approximate retrieval algorithm includes tree-based vector retrieval (for example, Annoy or KD-Tree), vector retrieval based on space division (for example, LSH), graph-based vector retrieval (for example, NSW or HNSW), and vector retrieval based on quantization coding (for example, SQ or PQ). Because densely or sparsely distributed data is regular, compared with an exact retrieval algorithm, performing retrieval according to an approximate retrieval algorithm to ensure that a possible result can be found ensures retrieval precision to reduce a calculation amount.

For example, for retrieval of a high-dimension vector, vector retrieval may be performed through graph-based vector retrieval. For retrieval of a high-dimension vector, vector retrieval may be performed through vector retrieval based on space division.

For another example, for a vector of integer data, vector retrieval may be performed through vector retrieval based on space division.

Optionally, the database may be further retrieved according to a retrieval algorithm indicated by a user. For example, a plurality of retrieval algorithms used by the first processor and the second processor to perform retrieval are determined based on the distribution characteristic of the database; and a retrieval algorithm indicated by the user is determined from the plurality of retrieval algorithms. For example, the retrieval algorithm indicated by the user is determined from a plurality of approximate retrieval algorithms.

Optionally, retrieval algorithms used by the first processor and the second processor to perform retrieval may be the same or different.

In some embodiments, the first processor may indicate a database and a retrieval request used by the second processor to perform retrieval. For example, in a retrieval request division solution, the first processor performs retrieval of the first partial retrieval request on the database, and the first processor may send the second partial retrieval request to the second processor; and the first processor performs retrieval of the second partial retrieval request on the database, and the first processor may send the first partial retrieval request to the second processor.

For another example, in a database division solution, the first processor performs retrieval of the plurality of retrieval requests on the first sub-database, and the first processor indicates the second processor to perform retrieval of the plurality of retrieval requests based on the second sub-database; and the first processor performs retrieval of the plurality of retrieval requests on the second sub-database, and the first processor indicates the second processor to perform retrieval of the plurality of retrieval requests based on the first sub-database.

**Step 240: The first processor executes the first partial retrieval request to obtain a first retrieval result.**

The first processor performs retrieval based on the database, the retrieval request, and the retrieval algorithm that are indicated by the retrieval solution and that are used by the first processor, to obtain the first retrieval result.

The retrieval solution indicates a database division solution. For example, the retrieval solution indicates a first sub-database used by the first processor to perform retrieval. The first processor performs retrieval based on the retrieval algorithm, the plurality of retrieval requests, and the first sub-database, to obtain the first retrieval result, where the first retrieval result includes a retrieval result similar to the plurality of retrieval requests.

The first processor queries the first partial retrieval request in the first sub-database, to obtain the first retrieval result. For example, it is assumed that the database includes 1 million vectors, and each vector is 128-dimensional. The first sub-database includes 500,000 vectors, and the second sub-database includes 500,000 vectors. Vector retrieval needs to be performed on 100 retrieval requests. The retrieval request is 128-dimensional. The first processor performs retrieval on the 100 retrieval requests based on 500,000 vectors, to obtain a first retrieval result, where the first retrieval result includes a retrieval result similar to the 100 retrieval requests.

The retrieval solution indicates that the plurality of retrieval requests are divided. For example, the retrieval solution indicates the first partial retrieval request used by the first processor to perform retrieval. The first processor performs retrieval based on the retrieval algorithm, the first partial retrieval request, and the database, to obtain the first retrieval result, where the first retrieval result includes a retrieval result similar to the first partial retrieval request.

The first processor queries the first partial retrieval request in the database, to obtain the first retrieval result. For example, it is assumed that the database includes 1 million vectors, and each vector is 128-dimensional. Vector retrieval needs to be performed on 100 retrieval requests. The retrieval request is 128-dimensional. The first partial retrieval request includes 50 retrieval requests, and the second partial retrieval request includes 50 retrieval requests. The first processor performs retrieval on the 50 retrieval requests based on 1 million vectors, to obtain a first retrieval result, where the first retrieval result includes a retrieval result similar to the 50 retrieval requests.

**Step 250: The second processor executes the second partial retrieval request to obtain the second retrieval result.**

The second processor performs retrieval based on the database, the retrieval request, and the retrieval algorithm that are indicated by the retrieval solution and that are used by the second processor, to obtain the second retrieval result.

The retrieval solution indicates a database division solution. For example, the retrieval solution indicates a second sub-database used by the second processor to perform retrieval. The second processor performs retrieval based on the retrieval algorithm, the plurality of retrieval requests, and the second sub-database, to obtain the second retrieval result, where the second retrieval result includes a retrieval result similar to the plurality of retrieval requests. The second processor queries the second partial retrieval request in the second sub-database, to obtain the second retrieval result.

The retrieval solution indicates that the plurality of retrieval requests are divided. For example, the retrieval solution indicates the second partial retrieval request used by the second processor to perform retrieval. The second processor performs retrieval based on the retrieval algorithm, the second partial retrieval request, and the database, to obtain the second retrieval result, where the second retrieval result includes a retrieval result similar to the second partial retrieval request. The second processor queries the second partial retrieval request in the database, to obtain the second retrieval result.

**Step 260: The first processor obtains retrieval results of the plurality of retrieval requests based on the first retrieval result and the second retrieval result.**

The retrieval solution indicates a database division solution, and the first retrieval result and the second retrieval result each include two possible retrieval results of the plurality of retrieval requests. In this case, the first processor selects, from the first retrieval result and the second retrieval result, a retrieval result similar to the retrieval request to determine the retrieval results of the plurality of retrieval requests, that is, may select the retrieval results of the plurality of retrieval requests from the first retrieval result and the second retrieval result based on a similarity. For example, the first retrieval result is compared with the second retrieval result, and a vector that is closer to or more similar to the retrieval request is selected.

It is assumed that vector retrieval needs to be performed on 10 retrieval requests. The first processor performs vector retrieval on three retrieval requests, and the first retrieval result includes retrieval results of the three retrieval requests. The second processor performs vector retrieval on three retrieval requests, and the second retrieval result includes retrieval results of the three retrieval requests. The first retrieval result is compared with the second retrieval result. If a result of a 1^{st} retrieval request in the first retrieval result is closer to or more similar to a result of a 1^{st} retrieval request in the second retrieval result and the 1^{st} retrieval request, a result of a 2^{nd} retrieval request in the first retrieval result is closer to or more similar to a result of a 2^{nd} retrieval request in the second retrieval result and the 1^{st} retrieval request, and a result of a 3^{rd} retrieval request in the second retrieval result is closer to or more similar to a result of a 3^{rd} retrieval request in the first retrieval result and the 1^{st} retrieval request, retrieval results of the three retrieval requests include the result of the 1^{st} retrieval request in the first retrieval result, the result of the 2^{nd} retrieval request in the first retrieval result, and the result of the 3^{rd} retrieval request in the second retrieval result.

The retrieval solution indicates that the plurality of retrieval requests are divided, and the first retrieval result and the second retrieval result each include a part of retrieval results of the plurality of retrieval requests. In this case, the first processor combines the first retrieval result and the second retrieval result, and the retrieval results of the plurality of retrieval requests include the first retrieval result and the second retrieval result.

For example, a sift1M dataset is used as an example. The dataset includes 1 million vectors, and each vector is 128-dimensional. Vector retrieval needs to be performed on 100 retrieval requests. The retrieval request is 128-dimensional. The first processor performs vector retrieval on a 1^{st} retrieval request to a 50^{th} retrieval request, where the first retrieval result includes retrieval results of the 1^{st} retrieval request to the 50^{th} retrieval request, and the second processor performs vector retrieval on a 51^{st} retrieval request to a 100^{th} retrieval request, where the second retrieval result includes retrieval results of the 51^{st} retrieval request to the 100^{th} retrieval request, and combines the first retrieval result and the second retrieval result to obtain retrieval results of the 100 retrieval requests.

Optionally, the first processor may further feed back retrieval results of the plurality of retrieval requests, and the client displays the retrieval results of the plurality of retrieval requests.

It should be noted that the foregoing embodiment is described by using an example in which the two processors perform retrieval in parallel. In some embodiments, retrieval may also be performed in parallel based on more than three processors. That is, the database is divided into three or more parts, or the plurality of retrieval requests are divided into three or more parts. Retrieval results of retrieval performed by more than three processors are combined, or a better retrieval result is selected from retrieval results of retrieval performed by more than three processors, to improve retrieval efficiency. For a division solution, refer to the descriptions in the foregoing embodiment. Details are not described again.

An application scenario of the retrieval method provided in this embodiment of this application includes but is not limited to the following scenarios:
Recommendation scenario: Based on a heterogeneous computing architecture, parallel retrieval is performed to retrieve and match multi-source heterogeneous data, such as user behavior, offering attributes, and content characteristics, improving effect and performance of a recommendation system and improving user satisfaction and a retention rate.
Internet scenario: Based on a heterogeneous computing architecture, parallel retrieval is performed to retrieve and analyze multimedia data such as web pages, texts, pictures, and videos, improving a capability of obtaining and understanding internet information and supporting various service scenarios such as search, advertisement, and social networking.
Large model scenario: Based on a heterogeneous computing architecture, parallel retrieval is performed to retrieve and optimize large-scale deep learning model parameters, improving training and deployment efficiency of large models and reducing computing and storage costs of the large models.

As a data amount and a data dimension of the database increase, more storage and computing resources need to be occupied. For example, the database includes 100 million 1024-dimensional vectors. Graph index construction for vector retrieval may occupy a storage capacity of about 350 gigabytes (Gigabyte, GB). A single processor cannot handle such a large-scale database. In addition, a large amount of computation is performed for retrieval based on the large-scale database, and a high concurrency requirement cannot be met. To resolve a problem of large-scale database and high-concurrency vector retrieval, hardware can be expanded. However, hardware cost increases. If the database is compressed by using quantization and compression technologies, retrieval precision is reduced. For example, an IVFPQ algorithm is used as an example. A higher model compression rate indicates lower algorithm precision. Therefore, according to the retrieval method provided in this embodiment of this application, it is determined, based on the characteristic of the database, whether to divide the database or divide the plurality of retrieval requests, so that the two processors perform retrieval on the plurality of retrieval requests in parallel based on different databases or different retrieval requests, to find the retrieval results of the plurality of retrieval requests more quickly. In this way, hardware expansion is not needed, and retrieval is performed in parallel based on a heterogeneous computing architecture, to implement efficient retrieval on databases of different scales, thereby improving utilization of computing power of the processors and a retrieval rate. In addition, compared with performing retrieval based on a retrieval algorithm or by randomly selecting a retrieval algorithm, determining a retrieval algorithm for retrieval based on a distribution characteristic of the database effectively improves retrieval precision.

The following describes a vector retrieval process by using examples with reference to the accompanying drawings.

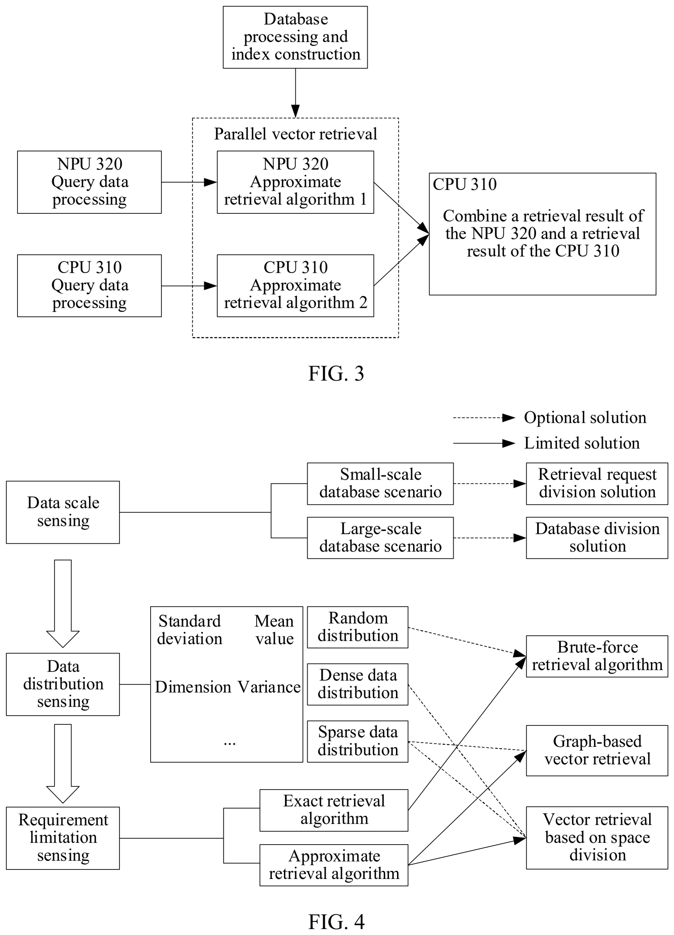

FIG. 3 is a diagram of performing vector retrieval based on a heterogeneous computing architecture according to this application. The heterogeneous computing architecture includes a CPU 310 and an NPU 320. The CPU 310 is configured to: construct an index and schedule a resource. Index construction may refer to changing a vector into a vector index through re-computation. Resource scheduling may refer to a database, a plurality of retrieval requests, and a retrieval algorithm that are used by the processor to perform vector retrieval. The CPU 310 and the NPU 320 perform vector retrieval, so that computing power of the CPU 310 and the NPU 320 is fully utilized.

The CPU 310 and the NPU 320 first process query data, for example, preprocess a retrieval request.
(1) The CPU 310 reads a database, and determines, based on a data scale, data distribution, and a requirement limitation, whether to divide the database or divide retrieval requests.
(2) The CPU 310 selects different division solutions through data scale sensing, and performs parallel vector retrieval based on a heterogeneous computing architecture.
(3) The CPU 310 adaptively determines a retrieval algorithm through data distribution sensing, and selects a retrieval algorithm with affinity computing power.
(4) The CPU 310 determines a final retrieval solution based on a requirement limitation.
(5) The NPU 320 performs vector retrieval based on an approximate retrieval algorithm 1. The CPU 310 performs vector retrieval based on an approximate retrieval algorithm 2.
(6) The CPU 310 determines retrieval results of the plurality of retrieval requests based on a retrieval result of the NPU 320 and a retrieval result of the CPU 310.

FIG. 4 is a diagram of a data sensing-based retrieval solution according to this application.

Data scale sensing is used to determine a division solution based on a scale of a database. For example, for a large-scale database, it is determined that a division solution is database division, and for a small-scale database, it is determined that a division solution is retrieval request division.

Data distribution sensing is used to determine a retrieval algorithm based on a distribution characteristic of the database. For example, a distribution characteristic is determined based on a statistical characteristic and an attribute of the database, and a retrieval algorithm is determined based on the distribution characteristic. The statistical characteristic includes at least one of a mean value, a standard deviation, a variance, or the like of the database. The attribute includes a vector dimension, a vector quantity, and a vector format. When the distribution characteristic is random distribution, it is determined that the retrieval algorithm is a brute-force retrieval algorithm. When the distribution characteristic is dense distribution, it is determined that the retrieval algorithm is vector retrieval based on space division. When the distribution characteristic is sparse distribution, it is determined that the retrieval algorithm is vector retrieval based on space division or graph-based vector retrieval.

Requirement limitation sensing indicates to perform retrieval according to an exact retrieval algorithm or an approximate retrieval algorithm.

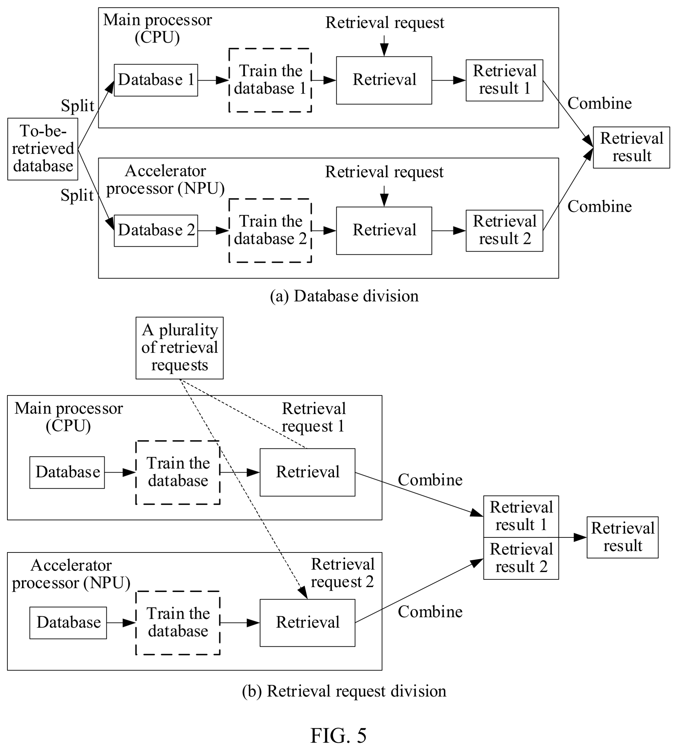

FIG. 5 is a diagram of performing retrieval based on a retrieval solution according to this application. As shown in (a) in FIG. 5, a division solution is database division. To-be-retrieved database (ALLBase) is divided based on division ratio (ratio) parameters, to obtain a database 1 (base1) and a database 2 (base2).

The database 1 is used as a database used by a CPU to perform retrieval. The CPU obtains an index of a corresponding affinity CPU by training the database 1, and stores the index in a storage associated with the CPU.

The database 2 is used as a database used by an NPU to perform retrieval. The NPU obtains an index of a corresponding affinity NPU by training the database 2, and stores the index in a storage associated with the NPU.

Optionally, the database 1 and the database 2 may be constructed and trained before the database is divided, that is, the database may be trained, to obtain an index of the database. The database division may refer to dividing a trained database. Training the database may refer to converting the database into an index structure applicable for query. For example, a hash operation is performed on the database to obtain a hash index.

In a retrieval phase, the CPU performs retrieval of the retrieval request based on the database 1, to obtain a retrieval result 1. The NPU performs retrieval of the retrieval request based on the database 2, to obtain a retrieval result 2. A retrieval result that is closer to or more similar to the retrieval request is selected from the retrieval result 1 and the retrieval result 2 based on a similarity.

As shown in (b) in FIG. 5, a division solution is retrieval request division. A CPU and an NPU perform vector retrieval based on a to-be-retrieved database (ALLBase).

The database (ALLBase) is used as a database used by the CPU to perform retrieval. The CPU obtains an index of a corresponding affinity CPU by training the database, and stores the index in a storage associated with the CPU.

The database (ALLBase) is used as a database used by an NPU to perform retrieval. The NPU obtains an index of a corresponding affinity CPU by training the database, and stores the index in a storage associated with the CPU.

In a retrieval phase, a plurality of retrieval requests (ALLQuery) are divided based on division ratio (ratio) parameters, to obtain a retrieval request 1 (query1) and a retrieval request 2 (query2). The retrieval request 1 and the retrieval request 2 may include one or more retrieval requests.

The CPU performs retrieval of the retrieval request 1 based on an index of the database that is constructed by the CPU, to obtain a retrieval result 1. The NPU performs retrieval of the retrieval request 2 based on an index of the database that is constructed by the NPU, to obtain a retrieval result 2. The retrieval result 1 and the retrieval result 2 are combined (combined) to obtain retrieval results of the retrieval requests (ALLQuery).

It may be understood that, to implement the functions in the foregoing embodiments, the client and the server (for example, a storage server) include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

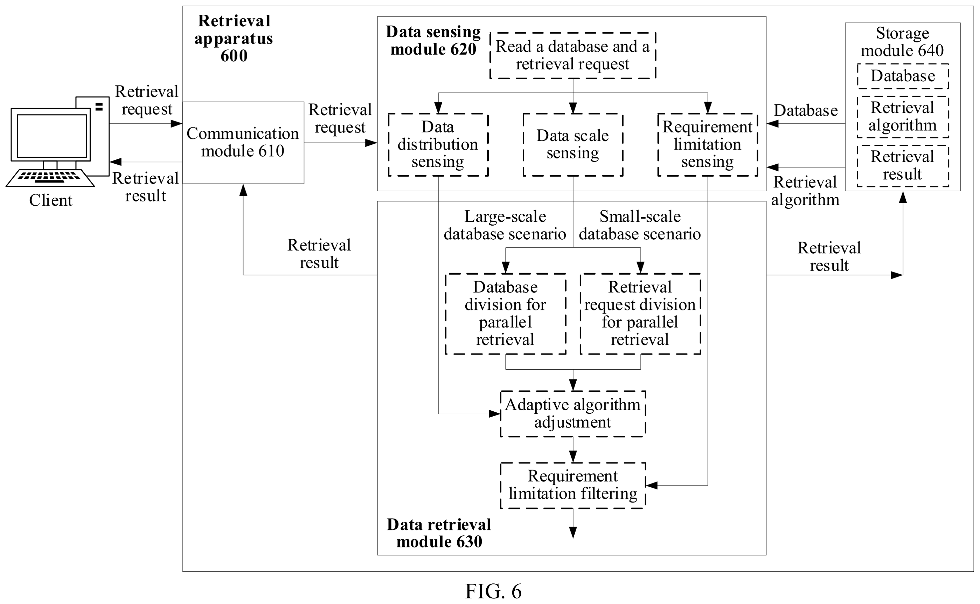

The foregoing describes, in detail with reference to FIG. 1 to FIG. 5, the retrieval method provided in this application. The following describes, with reference to FIG. 6, an apparatus provided in this application. The apparatus may be configured to implement functions of the computer device in the method embodiments, and therefore can also implement beneficial effects of the method embodiments. In this embodiment, the apparatus may be a computing node or a control node shown in FIG. 2, or may be a module (for example, a chip) applied to a computer device.

As shown in FIG. 6, the retrieval apparatus 600 includes a communication module 610, a data sensing module 620, a data retrieval module 630, and a storage module 640. The retrieval apparatus 600 is configured to implement functions of the computer device in the method embodiment shown in FIG. 2.

The communication module 610 is configured to obtain a plurality of retrieval requests.

The data sensing module 620 is configured to determine, based on the plurality of retrieval requests, a database that needs to be retrieved. For example, the data sensing module 620 is configured to perform step 220 in FIG. 2.

The data sensing module 620 is further configured to determine, based on a characteristic of the database, that a first processor executes a first partial retrieval request in the plurality of retrieval requests, and a second processor executes a second partial retrieval request in the plurality of retrieval requests. For example, the data sensing module 620 is configured to perform step 230 in FIG. 2.

The data sensing module 620 is specifically configured to: when a size of the database is greater than a processing capability of the first processor, separately send the plurality of retrieval requests to the first processor and the second processor, where both the first partial retrieval request and the second partial retrieval request are the plurality of retrieval requests.

The data sensing module 620 is specifically configured to divide the database into a first sub-database and a second sub-database based on capabilities of the first processor and the second processor.

The data sensing module 620 is specifically configured to: when a size of the database is less than or equal to a processing capability of the first processor, divide the plurality of retrieval requests into the first partial retrieval request and the second partial retrieval request based on processing capabilities of the first processor and the second processor.

The data sensing module 620 is further configured to perform requirement limitation sensing, that is, determine a retrieval algorithm based on a distribution characteristic of the database. The first processor executes the first partial retrieval request according to the retrieval algorithm to obtain a first retrieval result, and the second processor executes the second partial retrieval request according to the retrieval algorithm to obtain a second retrieval result.

The data retrieval module 630 is configured to: execute the first partial retrieval request to obtain the first retrieval result, and execute the second partial retrieval request to obtain the second retrieval result. For example, the data retrieval module 630 is configured to perform step 240 and step 250 in FIG. 2.

The data retrieval module 630 is further configured to obtain retrieval results of the plurality of retrieval requests based on the first retrieval result and the second retrieval result. For example, the data retrieval module 630 is configured to perform step 260 in FIG. 2.

The storage module 640 is configured to store the database and the retrieval algorithm to facilitate retrieval. The storage module 640 may further store the retrieval result.

It should be understood that the retrieval apparatus 600 in this embodiment of this application may be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof. Alternatively, when the retrieval method shown in FIG. 2 may be implemented by software, the retrieval apparatus 600 and the modules of the retrieval apparatus 600 may be software modules.

The retrieval apparatus 600 according to this embodiment of this application may correspondingly perform the method described in embodiments of this application. In addition, the foregoing and other operations and/or functions of the units in the retrieval apparatus 600 are separately used to implement corresponding procedures of the method in FIG. 2. For brevity, details are not described herein again.

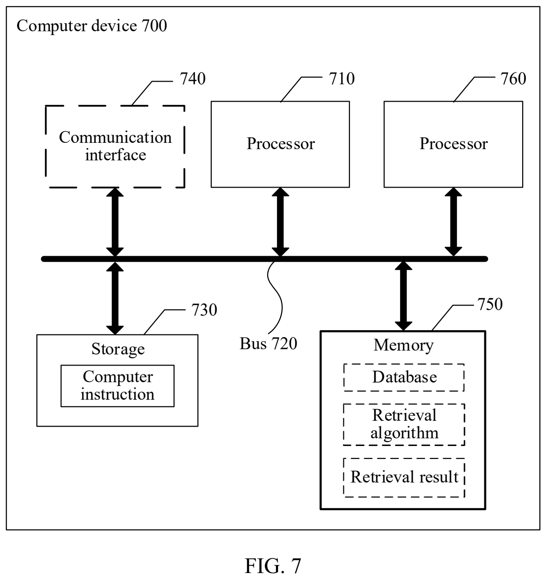

FIG. 7 is a diagram of a structure of a computer device 700 according to this application. As shown in FIG. 7, the computer device 700 includes a processor 710, a bus 720, a storage 730, a communication interface 740, a memory 750 (which may also be referred to as a main memory (main memory) unit), and a processor 760. The processor 710, the processor 760, the storage 730, the memory 750, and the communication interface 740 are connected through the bus 720.

It should be understood that, in this embodiment, the processor 710 may be a CPU, or the processor 710 may be another general-purpose processor, a digital signal processor (digital signal processor, DSP), an ASIC, an FPGA or another programmable logic device, a discrete gate or a transistor logic device, a discrete hardware component, or the like. The general-purpose processor may be a microprocessor, any conventional processor, or the like.

The computer device 700 may further include a graphics processing unit (graphics processing unit, GPU), a neural network processing unit (neural network processing unit, NPU), a microprocessor, an ASIC, or one or more integrated circuits configured to control program execution in the solutions of this application. For example, the processor 760 may be a GPU or an NPU.

The communication interface 740 is configured to implement communication between the computer device 700 and an external device or a component. In this application, when the computer device 700 is configured to implement a function of the client shown in FIG. 2, the communication interface 740 is configured to send a retrieval request, so that the processor 710 and the processor 760 jointly perform retrieval. When the computer device 700 is configured to implement a function of the computer device shown in FIG. 2, the communication interface 740 is configured to obtain a retrieval request, so that the processor 710 and the processor 760 jointly perform retrieval.

The bus 720 may include a path, configured to transmit information between the foregoing components (such as the processor 710, the memory 750, and the storage 730). In addition to a data bus, the bus 720 may further include a power bus, a control bus, a status signal bus, and the like. However, for clear description, various types of buses in FIG. 7 are marked as the bus 720. The bus 720 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), or the like. The bus 720 may be classified into an address bus, a data bus, a control bus, and the like.

In an example, the computer device 700 may include a plurality of processors. The processor may be a multi-core (multi-CPU) processor. The processor herein may be one or more devices, circuits, and/or computing units configured to process data (for example, computer program instructions).

It should be noted that, in FIG. 7, only an example in which the computer device 700 includes one processor 710 and one storage 730 is used. Herein, the processor 710 and the storage 730 each indicate a type of component or device. In a specific embodiment, a quantity of components or devices in each type may be determined based on a service requirement.

The memory 750 may be a volatile memory pool or a nonvolatile memory pool, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 750 is configured to store a database, a retrieval algorithm, a retrieval result, and the like.

The storage 730 may correspond to a storage medium, for example, a magnetic disk, such as a mechanical hard disk or a solid-state drive, configured to store information such as a database and a retrieval algorithm in the foregoing method embodiment.

The computer device 700 may be a general-purpose device or a dedicated device. For example, the computer device 700 may be an edge device (for example, a box carrying a chip with a processing capability). Optionally, the computer device 700 may alternatively be a server or another device having a computing capability.

It should be understood that the computer device 700 according to this embodiment may correspond to the retrieval apparatus 600 in this embodiment, and may correspond to a corresponding body that performs any method in FIG. 2. In addition, the foregoing and other operations and/or functions of the modules in the retrieval apparatus 600 are respectively used to implement corresponding procedures of the method in FIG. 2. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a computing device. Certainly, the processor and the storage medium may alternatively exist in a computing device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are completely or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A retrieval method, applied to a computing system, wherein the computing system comprises a first processor and a second processor, and the method comprises:
determining, by the first processor, a database to be retrieved based on a plurality of retrieval requests;
determining, based on a characteristic of the database, that the first processor executes a first partial retrieval request in the plurality of retrieval requests, and the second processor executes a second partial retrieval request in the plurality of retrieval requests;
executing, by the first processor, the first partial retrieval request to obtain a first retrieval result, and executing, by the second processor, a second partial retrieval request to obtain a second retrieval result; and
obtaining retrieval results of the plurality of retrieval requests based on the first retrieval result and the second retrieval result.

2. The method according to claim 1, wherein determining, based on a characteristic of the database, that the first processor executes the first partial retrieval request in the plurality of retrieval requests, and the second processor executes the second partial retrieval request in the plurality of retrieval requests comprises:
when a size of the database is greater than a processing capability of the first processor, separately sending the plurality of retrieval requests to the first processor and the second processor, wherein both the first partial retrieval request and the second partial retrieval request are the plurality of retrieval requests.

3. The method according to claim 2, wherein the method comprises: dividing the database into a first sub-database and a second sub-database based on capabilities of the first processor and the second processor; and
executing, by the first processor, the first partial retrieval request to obtain the first retrieval result, and executing, by the second processor, the second partial retrieval request to obtain the second retrieval result comprises:
querying, by the first processor, the first partial retrieval request in the first sub-database to obtain the first retrieval result, and querying, by the second processor, the second partial retrieval request in the second sub-database to obtain the second retrieval result.

4. The method according to claim 3, wherein obtaining the retrieval results of the plurality of retrieval requests based on the first retrieval result and the second retrieval result comprises:
selecting, from the first retrieval result and the second retrieval result, a retrieval result similar to the retrieval request, to determine the retrieval results of the plurality of retrieval requests.

5. The method according to claim 1, wherein determining, based on a characteristic of the database, that the first processor executes the first partial retrieval request in the plurality of retrieval requests, and the second processor executes the second partial retrieval request in the plurality of retrieval requests comprises:
when a size of the database is less than or equal to a processing capability of the first processor, dividing the plurality of retrieval requests into the first partial retrieval request and the second partial retrieval request based on processing capabilities of the first processor and the second processor.

6. The method according to claim 5, wherein executing, by the first processor, the first partial retrieval request to obtain the first retrieval result, and executing, by the second processor, the second partial retrieval request to obtain the second retrieval result comprises:
querying, by the first processor, the first partial retrieval request in the database to obtain the first retrieval result, and querying, by the second processor, the second partial retrieval request in the database to obtain the second retrieval result.

7. The method according to claim 3 or 6, wherein executing, by the first processor, the first partial retrieval request to obtain the first retrieval result, and executing, by the second processor, the second partial retrieval request to obtain the second retrieval result comprises:
determining a retrieval algorithm based on a distribution characteristic of the database; and
executing, by the first processor, the first partial retrieval request according to the retrieval algorithm to obtain the first retrieval result, and executing, by the second processor, the second partial retrieval request according to the retrieval algorithm to obtain the second retrieval result.

8. The method according to claim 7, wherein determining the retrieval algorithm based on the distribution characteristic of the database comprises:
when the distribution characteristic is random distribution, determining that the retrieval algorithm is an exact retrieval algorithm; or
when the distribution characteristic is dense distribution or sparse distribution, determining that the retrieval algorithm is an approximate retrieval algorithm.

9. The method according to claim 7 or 8, wherein the method further comprises:
determining the distribution characteristic based on a statistical characteristic and an attribute of the database.

10. A computer device, wherein the computer device comprises a storage and a plurality of different types of processors, the storage is configured to store a group of computer instructions, and when the processor executes the group of computer instructions, the plurality of different types of processors jointly perform operation steps of the method according to any one of claims 1 to 9.
